# EUROPEAN PATENT APPLICATION

(11) **EP 0 676 228 A1**
(43) Date of publication of application: **11.10.1995**
(21) Application number: 94306857.7
(22) Date of filing: 20.09.1994
(51) Int. Cl.: B01D 46/42, F02M 35/024, B01D 46/24

(54) **Air filter**

(30) Priority: 05.04.1994 ZA 942357; 15.09.1994 ZA 947135
(71) Applicant: G.U.D. FILTERS (ATLANTIS) (PROPRIETARY) LIMITED, Atlantis (ZA)
(72) Inventor: Pienaar, Adriaan Johannes, Wynberg, Cape Town (ZA); Hockey, John Frederick, Waterfall, Durban (ZA); Read, Arland Everard, Durban North, Durban (ZA)
(74) Representative: Jackson, Peter Arthur

(57) **Abstract**

An air filter assembly comprises a housing (12) having an air inlet (14) and an air outlet (16). The housing contains an air filter element (30) which has an air outlet neck (38) thereon. The air outlet neck (38) extends through the air outlet (16) in the housing and is adapted to be connected directly to a clean air conduit with which the air filter is to be used. The invention extends to an air filter element for use with the air filter assembly. The air filter element preferably comprises a primary filter element (30) which may be formed of concertina filter paper, and a safety filter element (76) which is located on the clean air side of the primary filter element and may be formed of non-woven felt or like material.

## Description

THIS invention relates to filters of the type used to filter air for internal combustion engines or like machines. The invention will be described with particular reference to internal combustion engine air filters, but it will be understood that the invention can be used in other applications.

Conventionally, air filters have comprised an outer housing which is generally in the form of pressed steel body or the like and is formed in two or more separable components. The housing itself is mounted to or adjacent the engine with which it has to be used and the housing is openable to receive a filter element. The filter element, which generally comprises a paper filter of concertina construction, is located within the housing. Suitable seals are provided for ensuring that air flow takes place from an inlet into the housing, through the paper filter element, to an outlet from the housing.

Generally, the outlet from the housing is in the form of a neck which is integral with the housing and which is connected to a clean air conduit which links the air filter to an air inlet manifold for the engine. To replace the paper filter element it is necessary to separate the housing into its separable components which then allows the filter element to be removed from the interior of the housing. To ensure the filter element seals effectively with sealing surfaces within the housing, it is necessary that the housing is of reasonably robust construction and all sealing surfaces are formed to reasonably close tolerances to thereby ensure that the filter element contacts those sealing surfaces without any air gaps there between. The necessary precision and the requisite rigidity of construction increases the cost and complexity of the housing.

A further problem arises where the filter arrangement incorporates a safety filter element. A safety element may be provided "downstream" of the primary element, that is, on the clean air side of the primary element. The safety element is adapted to perform as a filter element only where failure of the primary element or one or other of its seals occurs. Generally the safety element is also of hollow cylindrical configuration and is shaped and configured to nest within the hollow core of the primary and safety elements within the housing. A mounting yoke is provided on the housing. The mounting yoke is mounted axially within the housing and is shaped to fit within the hollow centre of the safety element. The yoke has a threaded shank on the free end thereof and the safety element and the primary element both have a hole therein through which the shank passes. The primary and safety elements are bolted to the yoke with wing nuts, the arrangement being such that the respective wing nuts clamp the sealing rings of the filter elements against a sealing surface on the housing.

This arrangement requires considerable fabrication of the filter elements. Not only do they need to be relatively strong in an axial direction to carry the clamping load but also, generally, they need to be reinforced in the region around their respective holes where the clamping nuts engage the element. Seals need to be provided around the threaded shank, and the threads of the nut and shank need to be of close tolerance to ensure there is no air leakage at this interface.

The seals on the ends of the safety and primary filter elements also need to be of relatively high quality to ensure that they do not fail over time. It does occur that excessive clamping force damages these seals and causes leakage. Also, as previously mentioned the sealing surface on the housing is critical. It needs to be both flat and smooth, for any imperfections tend to cause leakage. This uniformity of surface can be difficult to achieve, particularly because a number of welds are made to the housing just adjacent the sealing surfaces which tend to cause distortion of the sealing surfaces.

Lastly, a high quality weld is required to attach the outlet neck to the housing. Leakage through this weld would allow unfiltered air to pass through the clean air conduit into the engine.

It should also be noted that the safety filter element serves an important role when the primary filter element is replaced. Dust which cakes the outer surface of the primary filter element is often dislodged during primary filter element changes. This dust would, but for the safety element, be able to pass into the engine. Generally, the safety filter element is only changed every third or fourth time the primary element is changed. However, on those occasions when the safety element is changed this problem of dislodged dust, which is lying in the housing then entering the clean air pipe, is acute. The dislodged dust should be cleaned out of the housing manually, but this is a tedious and time consuming task which tends to be overlooked.

According to the invention there is provided an air filter element for an air filter which comprises, a housing having an air inlet and an air outlet, said air filter element comprising a body formed at least in part from a filter medium, and an air outlet neck, said outlet neck adapted to extend through the air outlet in a said housing, said outlet neck adapted to be connected to a clean air conduit which in use will convey clean air away from the filter assembly.

The filter element may comprise a concertina paper or other filtration media member of generally cylindrical form having a hollow central passage with a sealing plate on one end thereof and the neck formed on the other end thereof. The neck may comprise a tubular section which is connected into the central aperture of an annular disc which in turn is fitted over the end of the concertina paper member. Alternatively, the tubular section and the annular disc may be integrally formed.

The filter element may incorporate a safety filter element on the clean air side of the filter medium. The safety filter element may comprise a hollow cylindrical tube of filter medium which is sealed, at one end thereof to the sealing plate, and the other end thereof to the outlet neck. The filter element may have a cylindrical perforated metal support core in the hollow centre thereof and said safety filter element may surround the support core. The safety filter element may be formed of a non-woven felt or like fabric.

These and further features of the invention will be made apparent from the description of embodiments of the invention given below by way of example. It is, however, to be understood that the specific features of the embodiments described herein are not to be construed as limiting on the invention.

In the accompanying drawings:

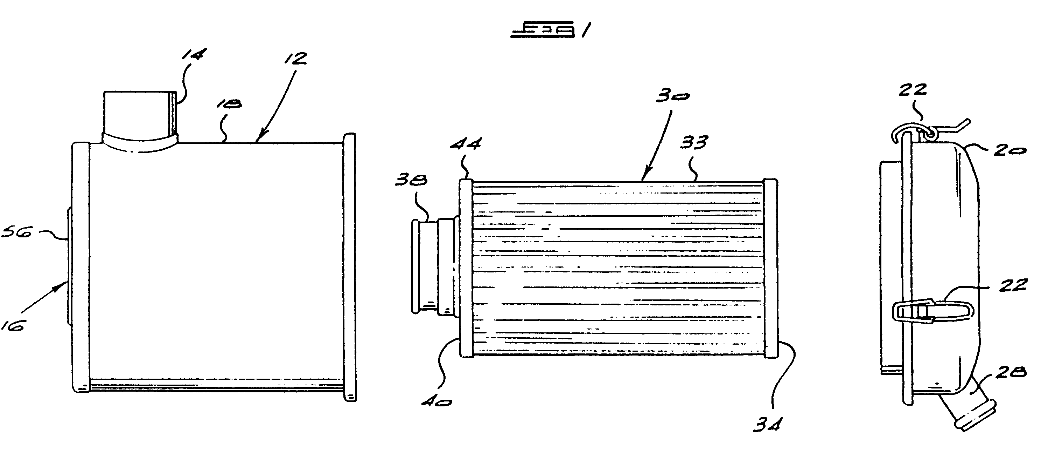

- **Figure 1**: shows an exploded view of an air filter according to the invention;
- **Figure 2**: shows a longitudinal cross-section through the air filter shown in Figure 1;
- **Figure 3**: shows an enlarged sectional view of a different connection between the filter element and the neck; and
- **Figure 4**: shows a cross-sectional side view through a filter element which incorporates a safety element.

As shown in the drawings, an air filter designated by the numeral 10 includes a housing 12 which has an inlet 14 and an outlet 16. The housing is of generally cylindrical form and is comprised of a body 18 and a dust bowl 20, the two housing parts being connected together by releasable over-centre clips 22. Cyclone vanes 24 are provided within the housing 12 and air travelling between the inlet 14 and the outlet 16 must flow past the cyclone vanes 24. The cyclone vanes impart a spiral air flow pattern to the air flowing between the inlet and the outlet and this spiral air flow pattern tends to centrifugally force the heavier particles in the airstream radially outwardly to be deposited in the dust bowl 20. An evacuator 28 is provided for evacuating the solid particles from the dust bowl 20. The evacuator 28 has a one-way valve (not shown) for allowing the heavier particles to be removed from the dust bowl 20 but which prevents air being drawn into the housing through the evacuator 28 in the reverse direction. The principle of operation of the housing as described above is of generally standard form.

Located within the housing is an air filter element 30. The air filter element 30 comprises a cylindrical paper or other filtration media member 32 of standard construction. The material from which the member is made and the construction detail is standard and need not be described herein in greater detail. The member 32 may be of concertina paper construction, but felt or other filtration media can also be used. The filter element 30 has a plate member 34 on the lower end thereof which seals off the lower end of the filter element. The plate member may be made of metal or plastics. The plate member 34 seats against the dust bowl 20 and is held in position thereby. The filter element has a hollow central region as indicated at numeral 36. A perforated sleeve 33 may be located in this hollow central region 36. The sleeve 33 can be made from any suitable material such as metal or plastics.

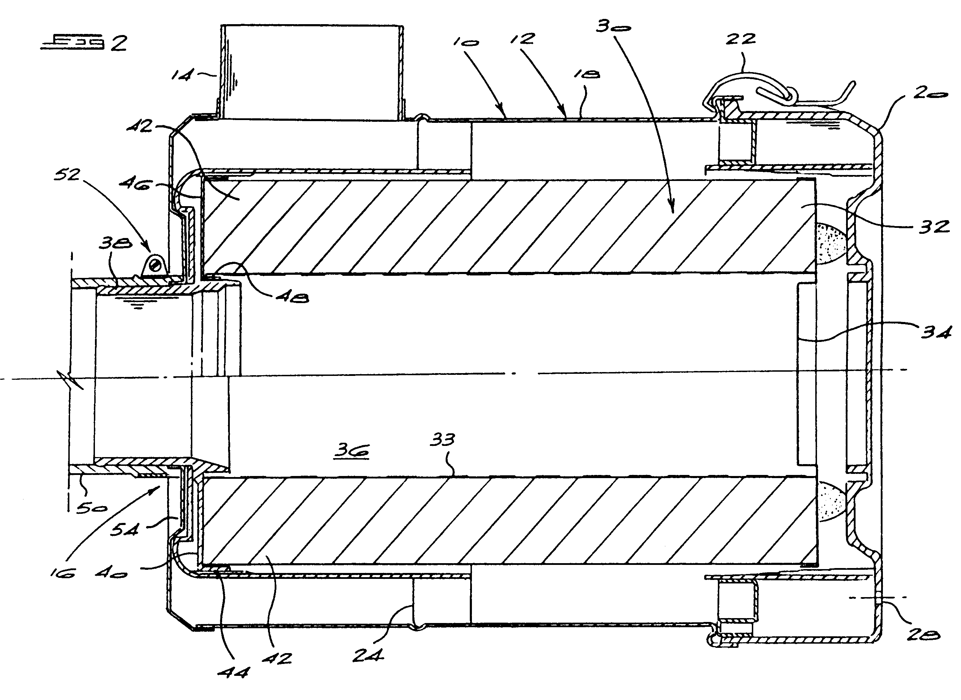

The upper end of the filter element has a neck 38 fitted thereto which extends through the outlet 16 of the housing. The neck 38 is of tubular form and can be connected to the cylindrical member 32 in one of two preferred ways. As shown in the lower part of Figure 2, the neck 38 is integrally formed with a cylindrical disc portion 40 which fits over the end 42 of the paper element 32 and is secured thereto to prevent air leakage between the said end 42 and the disc portion 40. A skirt 44 is integrally formed with the peripheral edge of the disc portion 40 to enhance the sealing effect and assist connection with the paper member.

An alternative arrangement is shown at the upper part of Figure 2. As shown, the neck portion 38 is connected to but sealed with a separate annular disc element indicated at numeral 46. That disc element 46 is also fitted in the manner described above over the end 42 of the paper filter member 32 and is sealed therewith. The disc element 46 and the neck element 38 are connected together as indicated at numeral 48 in a sealed manner.

The neck and/or disc portion (40 or 46) may be made of metal or rigid plastics materials depending on strength and other requirements.

The neck 38 of the filter element is connected to the clean air conduit 50 by means of a hose clamp 52 or the like. Generally the conduit 50 will be of flexible construction to facilitate a sealed connection between the neck 38 and the conduit 50 and the clamp 52 ensures that that seal is airtight.

Since the neck element 38 and the annular disc portion 40 (or 46) is sealed to the end 42 of the paper element, there is no chance of air passing directly from the inlet 14 through to the conduit 50. Air will have to pass through the concertina paper member 32 in order to pass to the clean air conduit 50. It is thus not essential to have any seal (as is the case with prior art arrangements) between the end 42 of the filter element and the end 54 of the housing. There is a direct seal between the filter element 30 and the clean air conduit 50 which avoids the requirement for any seals between the filter element and the housing. This means that it is not necessary to provide a rigid sealing surface on the inner face of the end 54 to the housing or, indeed, at any other point within the housing.

The housing in the present embodiment serves mainly to provide a cyclonic effect to the air entering the housing and this cyclonic effect removes a majority of the solid particles entering the housing. The housing also serves as a convenient means for mounting the air cleaner assembly to the vehicle.

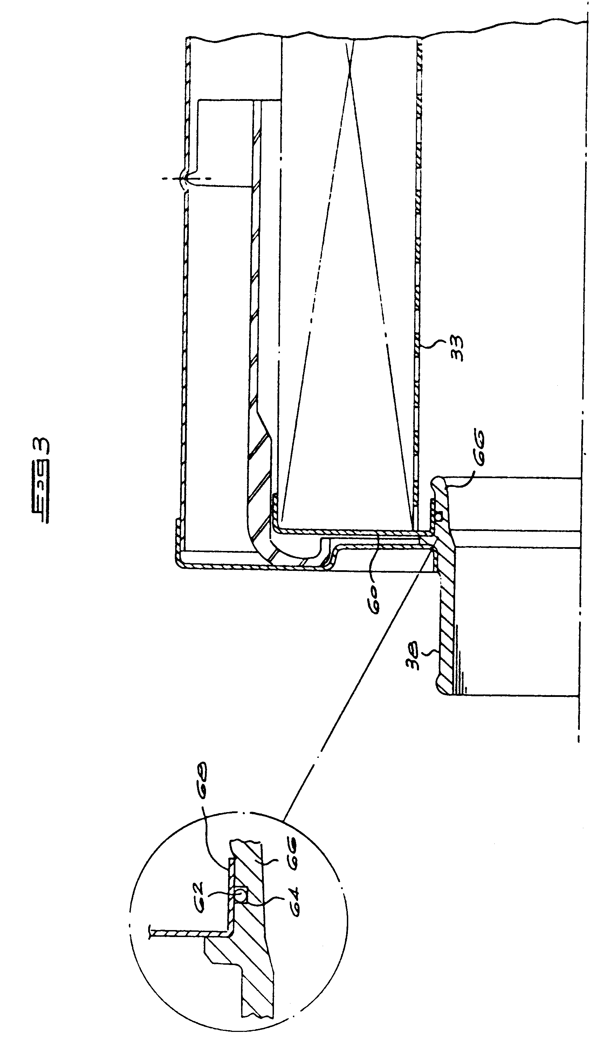

Figure 3 depicts a slightly different arrangement for connecting the neck 38 with the disc 46 which is fitted to the end 42 of the filter element 30. An O-ring seal 62 has been located in an annular groove 64 formed in an inwardly directed extension 66 of the neck 38. That O-ring seal 62 presses against an inwardly directed skirt portion 68 of the disc 46 to form an air-tight seal therewith.

There are thus certain design advantages to be obtained from using a filter element connected directly to the clean air conduit. These include the fact that, as mentioned above, only one critical seal is provided for connecting the filter element to the clean air conduit. There are also improved levels of service confidence as the filter element is visible and therefore cannot be left out of the housing completely.

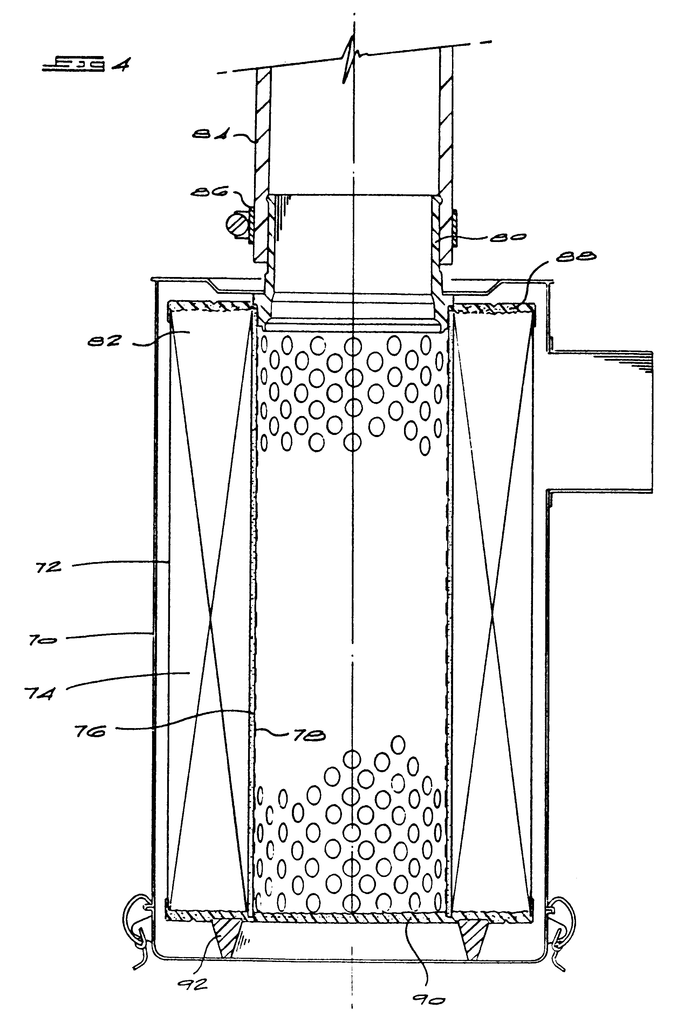

Figure 4 shows another embodiment of the invention. As shown, an air filter includes a housing 70 which is similar to that of the previous embodiment in which a filter element 72 is mounted. The filter element 72 includes a primary filter element 74 formed of concertina paper, and a safety filter element 76 formed of non-woven felt. The safety filter element is located on the clean-air or downstream side of the primary filter element and is adapted to filter air in the event of failure (due to tearing or other damage) of the primary filter element. A hollow, perforated, rigid sleeve 78 is provided on the inside of the safety filter element which provides support for the filter elements 74 and 76. The sleeve 78 is generally formed of thin metal plate.

A tubular neck 80 is fitted to the upper end 82 of the filter element 72 and is adapted to be connected to a clean air conduit 84 by means of a clamp 86 in the same manner as that of the previous embodiment. The neck 80 may be made of a rigid plastics material such as nylon. A soft support ring 92 is fitted to the opposite or lower end of the filter element for supporting that end against the housing 70.

It is convenient to mould the end plates 88 and 90 onto the ends of the filter elements 74 and 76. A suitable material for forming the end plates 88 and 90 will be a rigid polyurethane.

The filter element 72 may be formed by first assembling the primary filter element 74, the safety filter element 76 and the sleeve 78 into an open ended cylinder. To form the end plate 88 a polyurethane material in liquid form but with a catalyst added thereto will then be poured into a mould in which the neck 80 has first been located. While the polyurethane is still in liquid form the open ended cylinder will be pressed into the mould so that the polyurethane material flows into the interstices of the filter elements sealing off that end. The polyurethane will then be allowed to cure to a relatively rigid condition. Thereafter, the other end plate 90 will be formed in a similar manner. Polyurethane material will be poured into a mould in which the support ring 92 has first been located and the other end of the open ended cylinder will be embedded in the liquid polyurethane. The polyurethane will be allowed to cure thereby bonding the filter element to the moulded plate 90 and also bonding the support ring 92 to the plate 90. By moulding the end plates in this way the ends of the filter elements 74 and 76 are integrally moulded into the end plates thereby ensuring a leak-proof seal.

The embodiment shown in Figure 4 has a number of advantages over prior art arrangements. Since both the primary and safety filter elements are connected to the outlet neck which, in turn, is connected to the clean air conduit there is only one critical seal on the whole assembly. That seal is located at the connection between the clean air conduit and the neck and air tight sealing is easy to achieve because a manually tightenable clamp 86 is provided to ensure sealing takes place. The seal is also externally visible. In the prior art arrangements previously described there are ten seals, failure of any one of which can lead to unfiltered air being allowed to pass to the engine.

The housing for the filter of the present invention need not be as robust or as precisely made as has been the case with prior art housings. Since the filter element does not seal on any surface of the housing there are no "critical" surfaces on the housing which need to have quality control checks and service checks applied to them. Indeed, provided that housing serves to properly circulate the incoming air around the filter element it will serve its primary function. The housing also, of course, serves to support and protect the filter element. It is envisaged that the housing, because no part of the filter element needs to seal with it, will be formed of a thinner material than has been the case with prior art housings. In addition, since the housing has no neck for connection to the clean air conduit, the critical weld of the neck to the remaining part of the housing is avoided completely. This considerably reduces the manufacturing costs. The housing will not, of course, include a yoke so the welds and material and the nuts and seals associated with the yoke are all eliminated.

Clearly, as depicted in the Figure 4 embodiment, the incorporation of the safety filter into the primary filter is only possible with the filter arrangement of the invention. If, in prior art arrangements, the safety filter were incorporated in this manner, then failure of any one of the seals between the housing and the primary filter element would allow for leakage of unfiltered air into the clean air conduit. However, with the present invention since there are no seals between the housing and the filter elements in the filter arrangement of the invention this problem is avoided. The only reason for having a safety filter element at all is in the event of failure of the primary filter element itself. The problem of dislodged dust entering the clean air conduit is avoided completely because any dislodged dust lying in the housing cannot realistically pass to the clean air conduit since the conduit is spaced away from the housing. When the replacement filter element is located in the housing the neck of the filter element passes through the housing to connect to the clean air conduit and therefor does not come into contact with any dislodged dust which may be located in the housing or on any surfaces thereof.

It will be appreciated that any leakage in the air filter system can rapidly damage the engine to which the air filter system is mounted. This is particularly so where the vehicle is being driven in harsh conditions such as in quarries, dirt roads, or road making operations. It has been found that even a relatively fine leak, such as may occur between the threads of a mounting yoke and the securing nut, can admit sufficient solid particles to cause considerable damage to the engine. For these reasons, the fact that the filter of the present invention eliminates so many of the critical seals which are present in prior art arrangements is considered to be an important feature of this invention.

Various changes may be made to the above described embodiment without departing from the scope of the invention. For example, the invention can be used with different forms of housings and, for example, the evacuator described above is not essential. Different forms of dust collection devices at the lower end of the housing can also be incorporated. In addition, different forms of neck arrangement can be incorporated which seal effectively with the end of the paper filter member.

It is to be understood that the terms "upper" and "lower" are used herein to simplify the description of the invention. This is not, however, intended to imply that the invention can only be used in one particular orientation.

## Claims

1. An air filter element for an air filter which comprises a housing (12) having an air inlet (14) and an air outlet (16), said air filter element (30) comprising a body formed at least in part from a filter medium (32), and the air filter element being characterised in that it includes an air outlet neck (38), said outlet neck adapted to extend through the air outlet in a said housing, said outlet neck adapted to be connected to a clean air conduit which in use will convey clean air away from the filter assembly.

2. An air filter element according to claim 1 characterised in that said outlet neck (38) is of a tubular form and is connected to an end of the body.

3. An air filter element according to claim 2 characterised in that the body is of hollow right circular cylindrical form, said outlet neck (38) being coaxially connected to one end (42) thereof.

4. An air filter element according to claim 3 characterised in that said outlet neck (38) is formed of a substantially rigid plastics material and has a laterally extending connection formation (40) integrally formed therewith, said connection formation being connected to said one end of the body.

5. An air filter element according to claim 4 characterised in that said connection formation (40) comprises an annular flange which lies in a plane which is generally perpendicular to the axis of said tubular neck, said flange being bonded to the end of the body.

6. An air filter element according to claim 3 characterised in that said one end of the body is sealed off with an annular disc (46), and said outlet neck is connected to said annular disc.

7. An air filter element according to claim 6 characterised in that an annular seal (62) is located between the outlet neck and the annular disc.

8. An air filter element according to claim 1 characterised in that the filter medium (32) comprises filter paper folded into a concertina configuration.

9. An air filter element according to claim 1 characterised in that it incorporates a safety filter element (76) between the filter medium and the air outlet neck.

10. An air filter element according to claim 9 characterised in that the safety filter element (76) comprises a hollow cylindrical tube of filter medium which is sealed at one end thereof to the air outlet neck and to the opposite end thereof to a sealing plate (90).

11. An air filter element according to claim 10 characterised in that it includes a central hollow cylindrical perforated support sleeve (78) around which the safety filter element (76) is located.

12. An air filter element according to claim 9 characterised in that the safety filter element (76) is formed of a non-woven fabric material.

13. A housing for an air filter comprising, first and second separable components, an inlet to the housing and an air outlet (16) from the housing, the housing being characterised in that said air outlet is configured to have a tubular neck of an air filter element extending therethrough which in use is adapted to be connected to a clean air conduit.

14. A housing according to claim 13 characterised in that the housing is of generally right circular cylindrical configuration having at least one end of generally flat circular form, said air inlet being formed centrally in said one end.

15. A housing according to claim 14 characterised in that said air outlet is of circular shape and has a radially inner edge adapted to be in engagement with the neck of an air filter element.

16. An air filter comprising a housing formed of first and second separable components, an air inlet to the housing and an air outlet from the housing, and a replaceable air filter element the air filter being characterised in that the air filter element comprises a body formed at least in part from a filter medium, and an air outlet neck, said outlet neck extending through said air outlet, said outlet neck being adapted to be connected to a clean air conduit which in use will convey clean air away from the air filter.
